# EUROPEAN PATENT APPLICATION

(11) **EP 2 921 372 A1**
(43) Date of publication of application: **23.09.2015**
(21) Application number: 13855855.6
(22) Date of filing: 26.07.2013
(51) Int. Cl.: B62D 5/04, F16C 19/06, F16C 35/067

(54) **ELECTRIC POWER STEERING SYSTEM**

(30) Priority: 15.11.2012 JP 2012251328
(71) Applicant: NSK Ltd., Tokyo 141-8560 (JP)
(72) Inventor: KICHIKAWA Takefumi, Kanagawa 251-8501 (JP); MURAKAMI Takeshi, Kanagawa 251-8501 (JP); YAMAMOTO Takeshi, Gunma 371-8527 (JP); MAEDA Atsushi, Kanagawa 251-8501 (JP); ISHI Tatsuya, Gunma 371-8527 (JP)
(74) Representative: Grünecker Patent- und Rechtsanwälte PartG mbB
(86) International application number: PCT/JP2013/070394
(87) International publication number: WO 2014/077006

(57) **Abstract**

In an electric power steering system according to the present invention, a housing member for bearings, which supports at least one rolling bearing, is formed of resin. It is preferable that the resin: can be used continuously in an environment of -40 to 85°C; comprises a resin composition that contains a fibrous filler at 30-55 mass%; has a linear expansion coefficient in the range of 1.2x10⁻⁵-5.5x10⁻⁵ (1/°C) in both the fiber direction and the direction orthogonal thereto at temperatures in the range of 23 to 80°C; and has a water absorption rate of equal to or less than 4% when left in 23°C water for 24 hours.

## Description

### Technical Field

The present invention relates to an electric power steering system (EPS).

### Background Art

Conventionally, there has been known an electric power steering system which is installed in an automobile and the like, for example, as shown in Patent Document 1.

In the electric power steering system, a torsion bar which is elastically deformable in a torsion direction is provided at a portion of a steering system in a vehicle, thereby generating relative rotation proportional to steering torque between an input shaft and an output shaft connected to each other via the torsion bar. Then, steering torque is detected by measuring the relative rotation so as to lessen a load applied to a driver by generating steering auxiliary torque corresponding to the detected steering torque.

In such an electric power steering system, the input shaft, the output shaft, and a steering assist mechanism which generates steering auxiliary torque are included inside a housing. In general, the housing is formed with a metallic material such as aluminum. The steering assist mechanism generating steering auxiliary torque includes a torque sensor which detects steering force input to the input shaft, as steering torque. The steering auxiliary torque is calculated based on a detection value detected by the torque sensor. Then, the steering auxiliary torque is caused to be applied to the output shaft from an electric motor which is connected to the output shaft via a worm and a worm wheel.

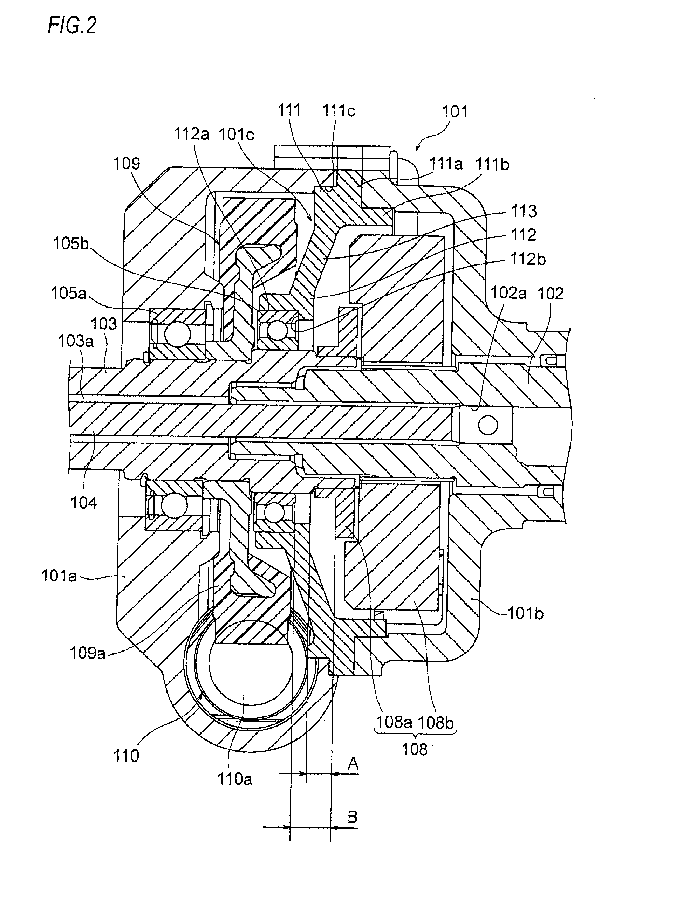

An example of the conventional electric power steering system having the housing formed with a metallic material is illustrated in Fig. 2.

In the electric power steering system illustrated in Fig. 2, a housing 101 has therein an input shaft 102, an output shaft 103, and a torque sensor 108 which detects steering force input to the input shaft 102, as steering torque. The input shaft 102 is supported by a rolling bearing (not illustrated) so as to be rotatable with respect to the housing 101. The output shaft 103 is supported by two rolling bearings 105a and 105b so as to be rotatable with respect to the housing 101.

Cylindrical holes 102a and 103a respectively concentric with their shaft centers are formed in the input shaft 102 and the output shaft 103. A torsion bar 104 is inserted into the cylindrical holes 102a and 103a. The input shaft 102 and the output shaft 103 are connected to each other via the torsion bar 104. One end portion of the torsion bar 104 and the input shaft 102 are provided with a communication hole 106 communicating with a fitting portion between the one end portion of the torsion bar 104 and the input shaft 102 in a radial direction and are connected to each other by inserting a pin (not illustrated) into the communication hole 106. The other end portion of the torsion bar 104 and the output shaft 103 are provided with a communication hole (not illustrated) communicating with a fitting portion between the other end portion of the torsion bar 104 and the output shaft 3 in the radial direction and are connected to each other by inserting a pin (not illustrated) into the communication hole.

On the right end side (not illustrated) of the input shaft 102, a steering wheel is integrally attached thereto in a rotary direction. At the left end of the output shaft 103, via a universal joint, for example, a pinion shaft configuring a known rack and pinion-type steering system is connected thereto. Accordingly, steering force generated by a steering operator who steers the steering wheel is transmitted to the steering wheel via the input shaft 102, the torsion bar 104, the output shaft 103, the universal joint, and the rack and pinion-type steering system.

In the output shaft 103, a worm wheel 109 which rotates coaxially and integrally with the output shaft 103 is fit externally. A resin engagement portion 109a provided in the worm wheel 109 and a worm 110a formed on an outer circumferential surface of the output shaft (not illustrated) of an electric motor 110 engage each other. Accordingly, rotary force of the electric motor 110 is transmitted to the output shaft 103 via its output shaft, the worm 110a and the worm wheel 109, thereby applying steering auxiliary torque to the output shaft 103 in an arbitrary direction by suitably switching the rotary direction of the electric motor 110. The steering auxiliary torque is calculated based on a detection value obtained through the torque sensor 108 which detects steering force transmitted to the input shaft 102 via the steering wheel, as steering torque (and/or a steering angle). The torque sensor 108 is an electromagnetic induction sensor and is formed with a first sensor member 108a which includes a magnetic member such as a permanent magnet, and a second sensor member 108b which includes a member configuring a magnetic circuit. The first sensor member 108a is fixed to the output shaft 103, whereas the second sensor member 108b is fixed to the input shaft 102. Steering torque (and/or a steering angle) is detected through relative angle displacement between the first sensor member 108a and the second sensor member 108b occurring when steering force is transmitted to the input shaft 102.

The steering assist mechanism applying steering auxiliary torque includes the torque sensor 108 and is included inside the housing 101 together with the input shaft 102 and the output shaft 103. The housing 101 is configured to have an output side housing member 101a, a bearing support housing member 101c, and an input side housing member 101b.

Here, the output side housing member 101a has therein the output shaft 103, the worm wheel 109, and the worm 110a. The output side housing member 101a rotatably supports the output shaft 103 via the rolling bearing 105a. Inside the output side housing member 101a, a motor attachment portion (not illustrated) for attaching the electric motor 110 is provided. The output side housing member 101a is formed with a metallic material such as aluminum.

The input side housing member 101b has therein the input shaft 102 and the torque sensor 108. The input side housing member 101b is also formed with a metallic material such as aluminum. The output side housing member 101a and the input side housing member 101b are shaped to have the same outer circumferential surfaces at a joining position thereof and are joined with each other by a bolt and the like (not illustrated). Accordingly, the inside of the housing 101 is sealed.

The bearing support housing member 101c supports the rolling bearing 105b which is provided at a position closest to the torque sensor 108 among the rolling bearings 105a and 105b. The bearing support housing member 101c rotatably supports the output shaft 103 via the rolling bearing 105b.

The bearing support housing member 101c is provided with a first portion 111 which is press-fitted on an inner circumferential surface of the output side housing member 101a, and a second portion 112 which supports the rolling bearing 105b. Then, in a cross section along an axial direction of the output shaft 3, the first portion 111 and the second portion 112 are connected to each other by a linear portion 113 which extends obliquely and linearly.

On an outer circumference of the first portion 111 of the bearing support housing member 101c, a large diameter portion 111a fitting an inner circumferential surface of the output side housing member 101a, and a small diameter portion 111b fitting the input side housing member 101b are provided. The first portion 111 of the bearing support housing member 101c is fixedly fitted by press-fitting the large diameter portion 111a on the inner circumferential surface of the output side housing member 101a. On an end surface of the output side housing member 101a in the axial direction on which the large diameter portion 111a fits, a stepped portion 111c is provided. The large diameter portion 111a of the bearing support housing member 1c is interposed between the stepped portion 111c and an end surface of the input side housing member 101b, and a position thereof in the axial direction is regulated.

On an inner circumferential surface side of the second portion 112 of the bearing support housing member 101c, a fitting portion 112a fitting an outer circumferential surface of the rolling bearing 105b, and a stepped surface 112b coming into contact with one side surface of the rolling bearing 105b in the axial direction are formed. The rolling bearing 105b is press-fitted in the fitting portion 112a so as to be supported by the bearing support housing member 101c.

Similar to the output side housing member 101a and the input side housing member 101b, the bearing support housing member 101c is also formed with a metallic material such as aluminum.

### Background Art Document

### Patent Document

Patent Document 1 : JP-A-2005-306050

### Summary of Invention

### Problem to be Solved by the Invention

However, the conventional electric power steering system has the following problems.

In the conventional electric power steering system, all of a plurality of housing members configuring a housing are formed with a metallic material such as aluminum. In an example illustrated in the drawing, all of the output side housing member 101a, the input side housing member 101b and the bearing support housing member 101c are formed with a metallic material. Therefore, there is a problem that the housing itself weighs a lot. Since the housing is formed with a metallic material, it is necessary to perform finishing through machining after performing molding through die casting, plastic forming, or the like. As a result, manufacturing steps are complicated.

When an electromagnetic induction sensor is used as a torque sensor, detection performance of the electromagnetic induction sensor is affected by metal which is disposed on the periphery thereof. Here, when a bearing support housing member supporting a rolling bearing which is provided at a position closest to the torque sensor is also formed with a metallic material, there is a problem that a space needs to be provided between the electromagnetic induction sensor and the metallic bearing support housing member supporting the rolling bearing which is provided at a position closest to the electromagnetic induction sensor among the rolling bearings, to the extent in which detection performance of the sensor is not affected. For example, in an example illustrated in Fig. 2, the bearing support housing member 101c is formed with a metallic material. Therefore, a distance A in the axial direction between the bearing support housing member 101c which is a metallic member closest to the electromagnetic induction sensor in an axial direction configuring the torque sensor 108, and the electromagnetic induction sensor (the torque sensor) 108 is a relatively long distance not affecting the detection performance of the electromagnetic induction sensor. Accordingly, a distance B in the axial direction between a rolling bearing 105b and the electromagnetic induction sensor is a relatively long distance not affecting the detection performance of the electromagnetic induction sensor. As a result, the layout on the periphery of the torque sensor is restricted. For this reason, due to an occurrence of limitations in miniaturization of an input shaft and an output shaft in the axial direction, it is difficult to ensure predetermined collapse strokes in a steering column.

Therefore, the present invention has been made to solve the problems and an object thereof is to provide an electric power steering system in which a housing includes at least one bearing support housing member supporting at least one rolling bearing which supports an output shaft so as to be rotatable with respect to the housing, and weight reduction of the housing itself can be achieved while processing of the housing can be simply performed in the electric power steering system configured to have a plurality of housing members.

Another object of the present invention is to provide the electric power steering system in which flexibility of the layout can be ensured and sufficient collapse strokes can be ensured even when the electromagnetic induction sensor is used as the torque sensor.

### Means for Solving the Problem

In order to solve the above-described problems, there is provided an electric power steering system comprising: an input shaft; an output shaft which is connected to the input shaft via a torsion bar; a torque sensor which detects steering force input to the input shaft as steering torque; a housing which includes therein the input shaft, the output shaft and the torque sensor; and at least one rolling bearing which supports the output shaft rotatably with respect to the housing, wherein the housing includes at least one bearing support housing member supporting the at least one rolling bearing and is configured by a plurality of housing members, and wherein the bearing support housing member supporting the at least one rolling bearing is formed of a resin.

It is preferable that the resin can be continuously used in a temperature environment ranging from -40°C to 85°C and the resin is made of a resin composition containing a fibrous filler ranging from 30% by mass to 55% by mass. Moreover, it is preferable that the coefficient of linear expansion of the resin ranges from 1.2 x 10⁻⁵ to 5.5 × 10⁻⁵ (1/°C) in both a fiber direction and a perpendicular direction to the fiber direction in a temperature range from 23°C to 80°C and a coefficient of water absorption of the resin is equal to or less than 4% when being left in the water at a temperature of 23°C for 24 hours. Particularly, it is preferable that a retention of tensile strength of the resin is equal to or greater than 70% after being left under an environment of 85°C and RH 85% for 500 hours.

In the electric power steering system, it is preferable that among bearing support housing members supporting the at least one rolling bearing, a bearing support housing member supporting a rolling bearing which is provided at a position closest to the torque sensor among the rolling bearings is formed of the resin, and the torque sensor is an electromagnetic induction sensor.

In the electric power steering system, it is preferable that the bearing support housing member supporting the rolling bearing which is provided at the position closest to the torque sensor among the rolling bearings includes a first portion which is press-fitted onto an inner circumferential surface of a different housing member, and a second portion which supports the rolling bearing provided at the position closest to the torque sensor among the rolling bearings, the first portion and the second portion are connected to each other through a bent portion bent at a predetermined angle which is an acute angle or obtuse angle formed therebetween in a cross section along an axial direction of the output shaft, or a curved portion which has a curved shape in a cross section along the axial direction of the output shaft, and the rolling bearing provided at the position closest to the torque sensor among the rolling bearings is supported by being press-fitted in the bearing support housing member so as to be fixedly fitted therein.

In the electric power steering system, the bearing support housing member supporting the rolling bearing which is provided at the position closest to the torque sensor among the rolling bearings may have a function to hold the torque sensor.

In the resin bearing support housing member of the electric power steering system according to the present invention, in order to minimize influence on a press-fit portion of the rolling bearing and a different housing member caused by aging deformation (a creep phenomenon) of the resin of the press-fit portion, a ring reinforcement (a metallic collar) may be arranged in each of the press-fit portions through an insert molding method. Even when there is no ring reinforcement, the resin bearing support housing member can be used inside a vehicle for a long period of time. However, when the ring reinforcement is arranged, it is possible to be stably used inside an engine compartment, that is, a more severe temperature region (up to 120°C) for a long period of time.

The ring reinforcement is arranged by performing insert molding. However, for the purpose of maximizing a deformation inhibitory effect, the ring reinforcement may be coated with a heat curing adhesive in its entirety before being subjected to insert molding. Specifically, the ring reinforcement may be previously coated with the adhesive in its entirety, and be heated and dried until the ring reinforcement is in a semi-cured state. Thereafter, the ring reinforcement coated with the adhesive may be set to a metal mold, thereby performing insert molding of the resin.

Incidentally, as a material of the ring reinforcement, for example, carbon steel for machine construction such as S53C, SUJ2 which is so-called bearing steel, a cold rolled steel sheet such as SPCC, or stainless steel such as SUS430 and SUS410 can be used. Particularly, in consideration of an aspect of weight reduction, light metals such as an aluminum alloy and a magnesium alloy are suitably selected.

In order to acquire high adhesion, specifically, in order to increase the adhesion area, it is preferable that the surface of the ring reinforcement is processed to have appropriate surface roughness through a technique such as a shot blast method or a chemical etching method.

As the adhesive for coating the ring reinforcement, a priming adhesive containing a phenol resin and an epoxy resin, or a coupling agent-based primer such as a silane-based primer, a chromium-based primer, a titanium-based primer, and an aluminate-based primer is suitably selected as the primer. Meanwhile, a phenol resin-based adhesive is suitably selected as the final coating adhesive.

The priming adhesive containing a phenol resin and an epoxy resin is used as an organic solvent solution which is dissolved in a single solvent such as isopropyl alcohol, methyl ethyl ketone, and methyl isobutyl ketone; or in a mixed solvent so as to have a component concentration ranging approximately from 0.5% by mass to 20% by mass. Meanwhile, the coupling agent adopted as a primer is used after being diluted with water, alcohol, or a mixed solvent of water and alcohol so as to have a component concentration ranging from 0.1% by mass to 2.0% by mass.

Here, the ring reinforcement according to the present invention is coated with the above priming adhesive and primer in a thickness ranging approximately from 0.5 µm to 5 µm through a method such as immersion coating, spray coating, and brush coating. Then, after being dried at room temperature, the priming adhesive and the primer are baked under drying and curing conditions of a temperature ranging approximately from 150°C to 250°C and a period of time ranging approximately from 5 minutes to 30 minutes.

Meanwhile, the final coating adhesive is adjusted as an organic solvent solution in which an adhesive composition having a resol-type phenol resin as the main component is dissolved to have a solid component concentration ranging approximately from 5% by mass to 40% by mass. As the drying and curing conditions, for example, the final coating adhesive is dried under conditions of a temperature ranging from 100°C to 150°C and a period of time ranging approximately from several minutes to 30 minutes, and then, the final coating adhesive is baked onto the ring reinforcement in a semi-cured state to the extent that the final coating adhesive is not washed away by a fusion resin at a high temperature and high pressure during insert molding. Then, the final coating adhesive is completely cured by heat from the fusion resin during insert molding, and moreover, by secondary heating (for example, approximately at 150°C, for two hours) succeeding thereafter.

### Effects of the Invention

According to an electric power steering system of the present invention, a bearing support housing member supporting at least one rolling bearing is formed of a resin. Thus, it is possible to achieve weight reduction in the bearing support housing member compared to a case where the bearing support housing member is formed with a metallic material.

As a result, a housing includes at least one bearing support housing member supporting the at least one rolling bearing which supports the output shaft so as to be rotatable with respect to the housing, and weight reduction of the housing itself can be achieved in the electric power steering system configured to have a plurality of housing members. Moreover, if the bearing support housing member is formed of a resin, the bearing support housing member can be processed with high precision by only performing molding such as injection molding, and thus, it is possible to make processing of the bearing support housing member simple.

It is preferable that the resin can be continuously used in a temperature environment ranging from -40°C to 85°C, the resin is made of a resin composition containing a fibrous filler ranging from 30% by mass to 55% by mass, a coefficient of linear expansion of the resin ranges from 1.2 × 10⁻⁵ to 5.5 × 10⁻⁵ (1/°C) in both a fiber direction and a perpendicular direction to the fiber direction in a temperature range from 23°C to 80°C, and a coefficient of water absorption of the resin is equal to or less than 4% when being left in the water at the temperature of 23°C for 24 hours. Accordingly, for example, when being repeatedly exposed to a high-temperature environment which is assumed to occur in an automobile and the like, the resin portion can be prevented from being damaged due to degradation of mechanical properties of the bearing support housing member formed with such a resin composition, occurring under a high-temperature environment. The resin portion can be prevented from being damaged due to pressure applied to the rolling bearing and the housing supported by the bearing support housing member, caused through expansion of the resin under environments of high temperature and high humidity. Under a low-temperature environment, it is possible to resolve an occurrence of a gap generated in a fitting portion between the bearing support housing member and the housing, caused by a difference in coefficients of linear expansion between a metallic material and a resin material.

It is preferable that the resin has a retention of tensile strength equal to or greater than 70% after being left under an environment of 85°C and RH 85% for 500 hours. Accordingly, when being exposed to environments of high temperature and high humidity for a long period of time during transportation and the like, the resin portion can be prevented from being damaged due to degradation of mechanical properties arising from deterioration of the resin-formed bearing support housing member caused by moisture absorption.

In the electric power steering system, when among the bearing support housing members supporting the at least one rolling bearing, the bearing support housing member supporting the rolling bearing which is provided at a position closest to a torque sensor among the rolling bearings is formed of the resin, and the torque sensor is an electromagnetic induction sensor, detection performance of the electromagnetic induction sensor is not affected by the bearing support housing member. Accordingly, the electromagnetic induction sensor and the bearing support housing member can be disposed to be close to each other. As a result, when spatial volume inside the housing is the same, the degree of freedom for the inside of the housing can be improved compared to a case where the bearing support housing member is formed with a metallic material. Moreover, since the electromagnetic induction sensor can be disposed to be close to the rolling bearing supported by the bearing support housing member, the dimensions of the housing and the output shaft in the axial direction can be decreased, and the flexibility of the layout for the outside of the housing can be improved as well. Thus, for example, collapse strokes of a steering column can be increased.

In the electric power steering system, when the bearing support housing member supporting the rolling bearing provided at the position closest to the torque sensor among the rolling bearings includes a first portion which is press-fitted onto an inner circumferential surface of a different housing member, and a second portion which supports the rolling bearing provided at the position closest to the torque sensor among the rolling bearings; and the first portion and the second portion are connected to each other through a bent portion bent at a predetermined angle which is an acute angle or obtuse angle formed therebetween in a cross section along an axial direction of the output shaft, or a curved portion which has a curved shape in a cross section along the axial direction of the output shaft, expansion of the bearing support housing member is absorbed by the bent portion or the curved portion. Thus, the bearing support housing member can be prevented from being damaged.

In the resin bearing support housing member of the electric power steering system according to the present invention, in order to minimize influence on a press-fit portion of the rolling bearing and a different housing member caused by aging deformation of the resin of the press-fit portion, a ring reinforcement may be arranged in each of the press-fit portions through an insert molding method. In this case, compared to a case where there is no ring reinforcement (presupposing that the resin made bearing support housing member is used inside a vehicle), it is possible to be used in a more severe temperature region (inside an engine compartment, up to 120°C) for a long period of time.

### Brief Description of Drawings

Fig. 1 is a cross-sectional view illustrating a main portion of an electric power steering system according to an embodiment of the present invention.
Fig. 2 is a cross-sectional view of an example of a conventional electric power steering system in which a housing is formed with a metallic material.

### Description of Embodiments

Hereinafter, an embodiment of the present invention will be described with reference to the drawings.

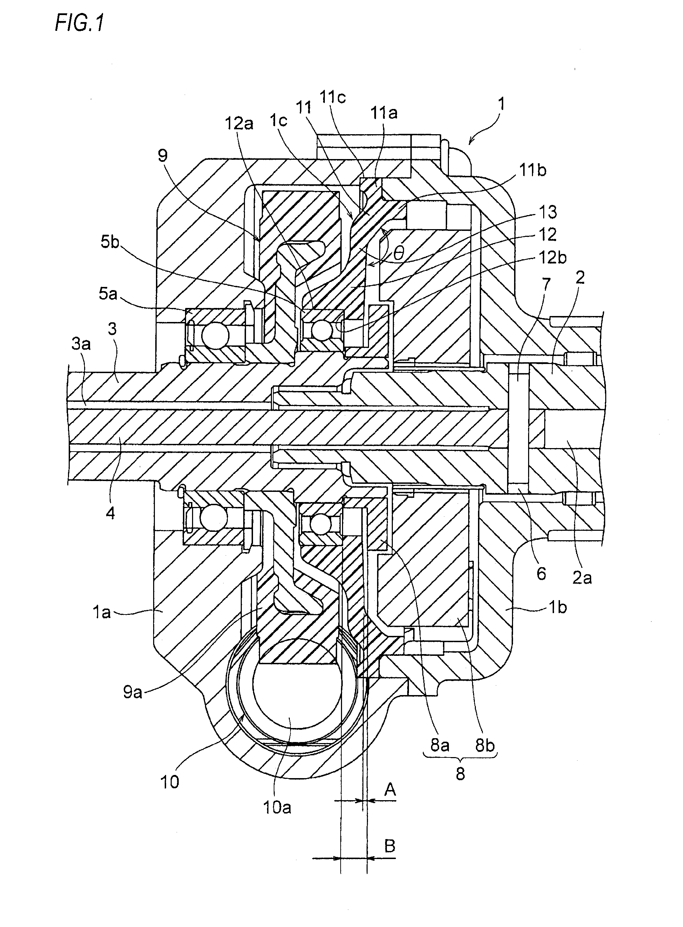

In an electric power steering system illustrated in Fig. 1, a housing 1 has therein an input shaft 2, an output shaft 3, and a torque sensor 8 which detects steering force input to the input shaft, as steering torque. The input shaft 2 is supported by a rolling bearing (not illustrated) so as to be rotatable with respect to the housing 1. The output shaft 3 is supported by two rolling bearings 5a and 5b so as to be rotatable with respect to the housing 1.

Cylindrical holes 2a and 3a respectively concentric with their shaft centers are formed in the input shaft 2 and the output shaft 3. A torsion bar 4 is inserted into the cylindrical holes 2a and 3a. The input shaft 2 and the output shaft 3 are connected to each other via the torsion bar 4. One end portion of the torsion bar 4 and the input shaft 2 are provided with a communication hole 6 communicating with a fitting portion between the one end portion of the torsion bar 4 and the input shaft 2 in a radial direction and are connected to each other by inserting a pin 7 into the communication hole 6. The other end portion of the torsion bar 4 and the output shaft 3 are provided with a communication hole (not illustrated) communicating with a fitting portion between the other end portion of the torsion bar 4 and the output shaft 3 in the radial direction and are connected to each other by inserting a pin (not illustrated) into the communication hole. Serrations may be formed at both end portions of the torsion bar 4 so as to respectively connect both the end portions of the torsion bar 4 to the input shaft 2 and the output shaft 3 by being press-fitted in a cylindrical hole 2a of the input shaft 2 and a cylindrical hole 3a of the output shaft 3. Moreover, the one end portion of the torsion bar 4 may be joined to the input shaft 2 or the output shaft 3 by using the pin, and the other end portion of the torsion bar 4 may be joined to the output shaft 3 or the input shaft 2 by performing serration press-fitting.

On the right end side (not illustrated) of the input shaft 2, a steering wheel is integrally attached thereto in a rotary direction. At the left end of the output shaft 3, via a universal joint, for example, a pinion shaft configuring a known rack and pinion-type steering system is connected thereto. Accordingly, steering force generated by a steering operator steering the steering wheel is transmitted to the steering wheel via the input shaft 2, the torsion bar 4, the output shaft 3, the universal joint, and the rack and pinion-type steering system.

In the output shaft 3, a worm wheel 9 which rotates coaxially and integrally with the output shaft 3 externally fits. A resin engagement portion 9a provided in the worm wheel 9 and a worm 10a formed on an outer circumferential surface of the output shaft (not illustrated) of an electric motor 10 engage each other. Accordingly, rotary force of the electric motor 10 is transmitted to the output shaft 3 via its output shaft, the worm 10a and the worm wheel 9, thereby applying steering auxiliary torque to the output shaft 3 in an arbitrary direction by suitably switching the rotary direction of the electric motor 10. The steering auxiliary torque is calculated based on a detection value obtained through the torque sensor 8 which detects steering force transmitted to the input shaft 2 via the steering wheel, as steering torque (and/or a steering angle). The torque sensor 8 is an electromagnetic induction sensor and includes a first sensor member 8a which includes a magnetic member such as a permanent magnet, and a second sensor member 8b which includes a member configuring a magnetic circuit. The first sensor member 8a is fixed to the output shaft 3. On the other hand, the second sensor member 8b is fixed to the input shaft 2. Steering torque (and/or a steering angle) is detected through relative angle displacement between the first sensor member 8a and the second sensor member 8b occurring when steering force is transmitted to the input shaft 2.

The steering assist mechanism applying steering auxiliary torque includes the torque sensor 8 and is included inside the housing 1 together with the input shaft 2 and the output shaft 3. The housing 1 is configured to have an output side housing member 1a, a bearing support housing member 1c, and an input side housing member 1b.

The output side housing member 1a has therein the output shaft 3, the worm wheel 9, and the worm 10a. The output side housing member 1a rotatably supports the output shaft 3 via the rolling bearing 5a. Inside the output side housing member 1a, a motor attachment portion (not illustrated) for attaching the electric motor 10 is provided. The output side housing member 1a is formed with a metallic material such as aluminum.

Meanwhile, the input side housing member 1b has therein the input shaft 2 and the torque sensor 8. The input side housing member 1b is also formed with a metallic material such as aluminum. The output side housing member 1a and the input side housing member 1b are shaped to have the same outer circumferential surfaces at a joining position thereof and are joined with each other by a bolt and the like (not illustrated). Accordingly, the inside of the housing 1 is sealed.

The bearing support housing member 1c supports the rolling bearing 5b which is provided at a position closest to the torque sensor 8 among the rolling bearings 5a and 5b. The bearing support housing member 1c rotatably supports the output shaft 3 via the rolling bearing 5b.

The bearing support housing member 1c is provided with a first portion 11 which is press-fitted on an inner circumferential surface of the output side housing member 1a, and a second portion 12 which supports the rolling bearing 5b. Then, the first portion 11 and the second portion 12 are connected to each other through a bent portion 13 bent at a predetermined angle θ which is an acute angle or obtuse angle formed therebetween in a cross section along an axial direction of the output shaft 3. The first portion 11 and the second portion 12 may be connected to each other through a curved portion (not illustrated) which has a curved shape in a cross section along the axial direction of the output shaft 3, instead of the bent portion 13.

Then, on an outer circumference of the first portion 11 of the bearing support housing member 1c, a large diameter portion 11a fitting an inner circumferential surface of the output side housing member 1a, and a small diameter portion 11b fitting the input side housing member 1b are provided. The first portion 11 of the bearing support housing member 1c is fixedly fitted by press-fitting the large diameter portion 11a on the inner circumferential surface of the output side housing member 1a.

On an end surface of the output side housing member 1a in the axial direction on which the large diameter portion 11a fits, a stepped portion 11c is provided. The large diameter portion 11a of the bearing support housing member 1c is interposed between the stepped portion 11c and an end surface of the input side housing member 1b such that a position thereof in the axial direction is regulated.

On an inner circumferential surface side of the second portion 12 of the bearing support housing member 1c, a fitting portion 12a fitting an outer circumferential surface of the rolling bearing 5b, and a stepped surface 12b coming into contact with one side surface of the rolling bearing 5b in the axial direction are formed. The rolling bearing 5b is press-fitted in the fitting portion 12a so as to be supported by the bearing support housing member 1c.

Here, the bearing support housing member 1c is formed of a resin.

As a resin material replaces the metallic material forming the bearing support housing member 1c in the conventional art, it is assumed that characteristic problems of the resin material occur.

For example, when being repeatedly exposed to environments of high temperature, low temperature, and high humidity which are assumed to occur in an automobile and the like, there is a problem of damage to the resin portion caused by degradation of mechanical properties of the resin material, occurring under a high-temperature environment. In addition, while the rolling bearing 5b is press-fitted in the bearing support housing member 1c on the inner diameter side and the output side housing member 1a is press-fitted therein on the outer diameter side, if the resin material expands under environments of high temperature or high humidity, since the coefficient of linear expansion of a resin material is greater than that of a metallic material, the resin material pressurizes the rolling bearing 5b and the output side housing member 1a. Accordingly, there is a concern of damage to the resin portion. Under a low-temperature environment, a gap is generated between the members, caused by a difference in coefficients of linear expansion between the metallic material and the resin material, thereby leading to problems such as an occurrence of a tapping sound caused by vibration, and degradation of the precision of the sensor.

In the present invention, in order to solve such problems, it is preferable to form the bearing support housing member 1c with a resin having the following characteristics.

That is, it is preferable to form the resin with a resin composition of which mechanical properties are less likely to be degraded and which can be continuously used even in a temperature environment ranging from -40°C to 85°C, that is, a usage environment temperature for a column portion of the electric power steering system. In order to suppress pressure caused by the gap between the members and expansion thereof, it is preferable that dimensional stability is high. Specifically, it is preferable that the coefficient of linear expansion of the resin ranges from 1.2 × 10⁻⁵ to 5.5 × 10⁻⁵ (1/°C) in both a fiber direction and a perpendicular direction to the fiber direction in a temperature range from 23°C to 80°C, and the coefficient of water absorption of the resin is equal to or less than 4% when being left in the water at the temperature of 23 °C for 24 hours.

When being exposed to environments of high temperature and high humidity for a long period of time during transportation and the like, there is a concern of damage to the resin portion caused by degradation of mechanical properties arising from deterioration of the resin bearing support housing member caused by moisture absorption.

Therefore, it is preferable that the resin has a retention of tensile strength equal to or greater than 70% after being left under an environment of 85°C and RH 85% for 500 hours.

However, it is difficult to realize the characteristics with only the resin material, and thus, a resin material containing a fibrous filler is used.

Here, as the resin composition which can be continuously used even in a temperature environment ranging from -40°C to 85°C, without being particularly limited, it is possible to exemplify so-called engineering plastic such as polyethylene terephthalate (PET), polybutylene terephthalate (PBT), polyamide (PA) 6, polyamide 11, polyamide 12, polyamide 66, polyamide 610, polyamide 612, polyamide 46, polyamide 410, modified polyamide 6T, and polyamide 9T; and a so-called super engineering plastic resin such as a fluorine resin, polyphenylene sulfide (PPS), polyether sulfone (PES), polyetherimide (PEI), polyamide-imide (PAI), thermoplastic polyimide, polyether ether ketone (PEEK), and polyether nitrile (PEN). These may be used alone or in combination. Particularly, polyethylene terephthalate (PET), polyamide 66, polyamide 46, and polyphenylene sulfide are well balanced between cost and performance, and thus, these can be suitably used. For the purpose requiring heat resistance and dimensional stability, a heat curing resin such as a phenol resin, a urea resin, an unsaturated polyester resin, and a polyurethane resin can be suitably used.

In the resin, it is preferable that the coefficient of linear expansion of the resin ranges from 1.2 × 10⁻⁵ to 5.5 × 10⁻⁵ (1/°C) in both the fiber direction and the perpendicular direction to the fiber direction in the temperature range from 23°C to 80°C. If the coefficient of linear expansion is smaller than 1.2 × 10⁻⁵ (1/°C), since the coefficient of linear expansion of the rolling bearing 5b press-fitted in the bearing support housing member 1c on the inner diameter side is 1.2 × 10⁻⁵ (1/°C), there is a possibility that a difference occurs between the coefficient of linear expansion of the bearing support housing member 1c and the coefficient of linear expansion of the rolling bearing 5b, resulting in generation of a gap between the fitting portion 12a and the outer diameter surface of the rolling bearing 5b. Meanwhile, if the coefficient of linear expansion is greater than 5.5 × 10⁻⁵ (1/°C), the output side housing member 1a is pressurized at the time of expansion, and excessive load stress is generated, thereby causing a problem of damage to the bearing support housing member 1c.

In the resin, the fibrous filler is not particularly limited. However, for example, a glass fiber, a carbon fiber, a metal fiber, an aramid fiber, an aromatic polyimide fiber, a liquid crystalline polyester fiber, a silicon carbide fiber, an alumina fiber, and a boron fiber can be exemplified. Particularly, a glass fiber and a carbon fiber have favorable reinforcement properties, thereby being preferable. As a glass fiber, it is more preferable to use a glass fiber which is an insulator and is less likely to affect electromagnetic induction of the torque sensor 8.

The percentage of content of the fibrous filler in the entire composition ranges from 30% by mass to 55% by mass, and is preferably to range from 35% by mass to 55% by mass. If the fibrous filler is compounded exceeding 55% by mass, it not only leads to poor molding characteristics caused by rapid degradation of fusion fluidity of the resin composition but also it cannot be expected that mechanical characteristics and dimensional stability are further improved. On the contrary, deformability of the material is extremely decreased, and thus, there is a concern of damage to the bearing support housing member 1c at the time of molding or assembling the bearing support housing member 1c. In contrast, if the percentage of content of the fibrous filler among the entire composition is smaller than 30% by mass, a reinforcement effect for mechanical characteristics decreases and dimensional stability becomes insufficient. The dimensional stability specifically denotes that the coefficient of linear expansion of the resin ranges from 1.2 × 10⁻⁵ to 5.5 × 10⁻⁵ (1/°C) in both the fiber direction and the perpendicular direction to the fiber direction in the temperature range from 23°C to 80°C, and the coefficient of water absorption of the resin is equal to or less than 4% when being left in the water at the temperature of 23°C for 24 hours.

In the resin forming the bearing support housing member 1c, in order to improve adherence and dispersibility between the resin and the fibrous filler by granting compatibility between the resin and the fibrous filler, the fibrous filler can be processed by using a coupling agent such as a silane-based coupling agent and a titanate-based coupling agent, or a surface treatment agent corresponding to the purpose, without being limited thereto.

Within a range not spoiling the objects of the present invention, various additive agents may be compounded. For example, a solid lubricant such as graphite, hexagonal boron nitride, fluorine mica, tetrafluoroethylene resin powder, tungsten disulfide, and molybdenum disulfide; inorganic powder; organic powder; a lubricant; plasticizer; rubber; a resin; an antioxidant; a heat stabilizer; a UV absorber; a photoprotective agent; a flame retardant; an antistatic agent; a release agent; a flow modifier; a heat conductive modifier; a non-tackifier; a crystallization promoter; a nucleating agent; a pigment; and a dye can be exemplified.

Particularly, when a polyester-based resin such as PET and PBT is used as a base resin of the bearing support housing member according to the present invention, there is a concern of deterioration caused by moisture absorption, and specifically, there is a concern of hydrolysis deterioration. Thus, it is preferable to add a hydrolysis inhibitor so as to enhance the tolerance thereof.

There is no particular limitation in the hydrolysis inhibitor added to the polyester-based base resin which is used to the bearing support housing member of the present invention. For example, a carbodiimide compound having one or more carbodiimide groups in molecules, a higher fatty acid, higher fatty acid water-insoluble salt, higher aliphatic alcohol, a hydrophobic agent such as hydrophobic silica, an aromatic mono-functional epoxy compound containing one glycidyl group in molecules, an aromatic poly-functional epoxy compound containing two or more glycidyl groups in molecules, a piperidine derivative, and a piperazinone derivative can be suitably used.

The hydrolysis inhibitor may be added to the polyester-based resin in the amount ranging from 0.01% by mass to 5% by mass, and may be preferably added thereto in the amount ranging from 0.05% by mass to 2% by mass.

In the present invention, as the mixing method of the base resin, the fibrous filler, and the additive agent, it is possible to exemplify a method of cooling and pelletizing followed by a process of impregnation of a continuous fiber bundle of the fibrous filler in a fusion resin in which various additive agents other than the fibrous filler are compounded. The temperature during fusion impregnation is not particularly limited. However, the temperature may be appropriately selected in a temperature range in which fusion of the resin which becomes the parent material proceeds sufficiently and the resin is not deteriorated.

The manufacturing method of the bearing support housing member 1c is not particularly limited. For example, the bearing support housing member 1c can be molded through an ordinary method such as injection molding, compression molding, and transfer molding. Particularly, the injection molding method excels in productivity and is able to provide an inexpensive bearing support housing member 1c, thereby being preferable. In order to prevent breakage of the fibrous filler during injection molding, it is preferable to increase the diameter of a nozzle in an injection molding machine and the diameter of a gate in a metal mold, and to suppress back pressure to be low while performing molding.

In the resin bearing support housing member of the electric power steering system according to the present invention, as a measure for decreasing aging deformation (a creep phenomenon) of the resin of a press-fit portion affecting the press-fit portion of the rolling bearing and a different housing member, a ring reinforcement (a metallic collar) may be arranged in each of the press-fit portions through an insert molding method. In this case, it is preferable that the surface of the ring reinforcement is processed to have appropriate surface roughness through a technique such as a shot blast method or a chemical etching method. The ring reinforcement may be previously coated with an adhesive, and be heated and dried until the ring reinforcement is in a semi-cured state. Thereafter, the ring reinforcement coated with the adhesive may be set to a metal mold, thereby performing insert molding of the resin.

As the bearing support housing member 1c is formed of the resin exemplified above, it is possible to achieve weight reduction compared to a case where the bearing support housing member 1c is formed with a metallic material.

As a result, in the electric power steering system, weight reduction of the housing 1 itself can be achieved. If the bearing support housing member 1c is formed with a metallic material, it is necessary to perform finishing through machining after performing molding through die casting, plastic forming, or the like. Therefore, manufacturing steps are complicated. In contrast, since the bearing support housing member 1c according to the present embodiment is formed of the resin which excels in dimensional stability, the bearing support housing member 1c can be processed with high precision by only performing molding such as injection molding. Accordingly, it is possible to omit finishing performed through machining after performing molding of the bearing support housing member 1c. That is, the bearing support housing member 1c can be simply manufactured. As a result, manufacturing steps can be decreased and a yield rate is also improved. Thus, it is possible to reduce the manufacturing cost.

In the electric power steering system, the bearing support housing member 1c supporting the rolling bearing 5b which is provided at the position closest to the torque sensor 8 among the housing members 1a and 1c supporting the rolling bearings 5a and 5b is formed of the resin. The torque sensor 8 is configured to be an electromagnetic induction sensor. As a result, detection performance of the electromagnetic induction sensor is not affected by the bearing support housing member 1c. Accordingly, the electromagnetic induction sensor configuring the torque sensor 8 and the bearing support housing member 1 c can be disposed to be close to each other. That is, when the bearing support housing member 1c is formed with a metallic material such as that in conventional art illustrated in Fig. 2, it is necessary to cause a distance A in the axial direction between the bearing support housing member 1c and the electromagnetic induction sensor to be a relatively long distance not affecting the detection performance of the electromagnetic induction sensor. In the present embodiment, since the bearing support housing member 1c is formed of a resin, it is sufficient that a distance B in the axial direction between the rolling bearing 5b which is a metallic member closest to the electromagnetic induction sensor in the axial direction configuring the torque sensor 8, and the electromagnetic induction sensor is a distance not affecting detection performance of the electromagnetic induction sensor.

As a result, if the spatial volume inside the housing 1 is the same, the degree of freedom for the inside of the housing can be improved compared to a case where the bearing support housing member 1c is formed with a metallic material. Meanwhile, if the spatial volume inside the housing 1 is variable, since the electromagnetic induction sensor and the rolling bearing 5b can be disposed to be close to each other by the difference between the distances A and B, the dimensions of the housing 1 and the output shaft 3 in the axial direction can be decreased. As a result, the flexibility of the layout for the outside of the housing can be improved as well. Thus, for example, collapse strokes of a steering column can be increased.

As the bearing support housing member 1c is formed of the resin, the bearing support housing member 1c and the electromagnetic induction sensor configuring the torque sensor 8 can be caused to come into contact with each other. That is, when the bearing support housing member 1c is formed with a metallic material such as that in the conventional art, it is necessary to cause the distance A between the bearing support housing member 1c and the electromagnetic induction sensor to be a distance not affecting the detection performance of the electromagnetic induction sensor. Therefore, in order to hold a sensor detection portion itself, there is a need to adopt a nonmetallic member, that is, mainly a resin member between a sensor main body and the bearing support housing member 1c (metal). As a result, there is a limitation in the layout for the periphery of the sensor. In contrast, according to the present embodiment, since the bearing support housing member 1c is formed of the resin, the bearing support housing member 1c can directly hold the sensor itself, or a nonmetallic member can be contracted in size. As a result, the flexibility of the layout for the periphery of the sensor can be ensured. In this case, for example, a convex portion may be provided in the electromagnetic induction sensor so as to function to hold the electromagnetic induction sensor configuring the torque sensor 8 in the bearing support housing 1c, and a concave portion engaging the convex portion may be provided in the bearing support housing member 1c. As the convex portion and the concave portion engage each other, the electromagnetic induction sensor can be subjected to rotation locking.

In the present embodiment, the bearing support housing member 1c supporting the rolling bearing 5b which is provided at the position closest to the torque sensor 8 is provided with the first portion 11 which is press-fitted on the inner circumferential surface of a different housing member 1a, and the second portion 12 supporting the rolling bearing 5b which is provided at the position closest to the torque sensor 8. Then, the first portion 11 and the second portion 12 are connected to each other through the bent portion 13 bent at the predetermined angle θ which is an acute angle or obtuse angle formed therebetween in a cross section along an axial direction of the output shaft 3, or through the curved portion which has a curved shape in a cross section along the axial direction of the output shaft 3. Therefore, expansion of the bearing support housing member 1c is absorbed through the bent portion 13 or the curved portion, and thus, it is possible to prevent the bearing support housing member 1c from being damaged.

The first portion 111 and the second portion 112 in the bearing support housing member 101c illustrated in Fig. 2 are connected to each other in a cross section along an axial direction of the output shaft 3 through a linear portion 113 which extends obliquely and linearly. If a resin is used for a material of the bearing support housing member 101c in such a configuration, when the bearing support housing member 101c expands, the linear portion 113 cannot smoothly absorb expansion thereof. Thus, there is a concern of damage to the bearing support housing member 101 c.

In the above, the embodiment of the present invention has been described. The present invention is not limited thereto, and various changes and modifications can be made.

For example, among the housing members 1a and 1c supporting at least one of the rolling bearings 5a and 5b, the bearing support housing member 1c supporting the rolling bearing 5b which is provided at the position closest to the torque sensor 8 among the rolling bearings 5a and 5b is formed of the resin. However, in addition thereto, the output side housing member 1a supporting the rolling bearing 5a may be formed of a resin, or only the output side housing member 1a may be formed of a resin.

The torque sensor 8 is not necessarily configured by the electromagnetic induction sensor. However, when the torque sensor 8 is configured by the electromagnetic induction sensor, the bearing support housing member 1c supporting the rolling bearing 5b which is provided at the position closest to the torque sensor 8 needs to be formed of a resin. Meanwhile, when the torque sensor 8 is not configured by the electromagnetic induction sensor, among the housing members 1a and 1c supporting the rolling bearings 5a and 5b, only the output side housing member 1a, only the bearing support housing member 1c, or both of the housing members 1a and 1c may be formed of a resin.

It is preferable that the bearing support housing member 1c supporting the rolling bearing 5b which is provided at the position closest to the torque sensor 8, among the rolling bearings 5a and 5b is press-fitted on the inner circumferential surface of a different housing member (the output side housing member 1a) so as to be fixedly fitted therein.

The rolling bearing 5b which is provided at the position closest to the torque sensor 8 among the rolling bearings 5a and 5b does not have to be supported by being press-fitted in the bearing support housing member 1c supporting the rolling bearing 5b so as to be fixedly fitted therein.

### Examples

Hereinafter, Examples for verifying effects of the present invention will be described.

### (1) Preparing of Test Piece

Raw materials of test pieces used in Examples and Comparison Examples are described as follows.

### [Examples]

Example 1: PET resin reinforced with glass fibers of 50% by mass (manufactured by DSM Engineering Plastics: Arnite (registered trademark) AV2 370 XT)
Example 2: PET resin reinforced with glass fibers of 50% by mass; with the option of hydrolysis prevention (manufactured by DSM Engineering Plastics: Arnite (registered trademark) A-X07455)
Example 3: polyamide 66 resin reinforced with glass fibers of 50% by mass (manufactured by BASF: Ultramid (registered trademark) A3EG10)
Example 4: PPS resin reinforced with glass fibers of 30% by mass (manufactured by Polyplastics Co., Ltd.: FORTRON 1130A1)
Example 5: PPS resin reinforced with carbon fibers of 30% by mass (manufactured by Polyplastics Co., Ltd.: FORTRON 2130A1)
Example 6: phenol resin reinforced with glass fibers of 55% by mass (manufactured by Sumitomo Bakelite Co., Ltd.: RF-GF55)

### [Comparison Examples]

Comparison Example 1: PET resin (manufactured by DSM Engineering Plastics: Arnite (registered trademark) A04 900), no filling fiber contained
Comparison Example 2: polyamide 66 resin (manufactured by BASF: Ultramid (registered trademark) A3W), no filling fiber contained
Comparison Example 3: polyamide 66 resin reinforced with glass fibers of 25% by mass (manufactured by BASF: Ultramid (registered trademark) A3HG5)
Comparison Example 4: PPS resin (manufactured by Polyplastics Co., Ltd.: FORTRON 0220A9), no filling fiber contained
Comparison Example 5: PPS resin reinforced with glass fibers + inorganic fillers of 65% by mass (manufactured by Polyplastics Co., Ltd.: FORTRON 6165A4)

Table 1 shows respective composition ratios (% by mass), coefficients of linear expansion (1/°C), and coefficients of water absorption (%) of the resin materials of Examples 1 to 6 and Comparison Examples 1 to 5.

**[Table 1]**

| | Base Resin | Filling Fibers | Filling Volume (% by mass) | Coefficients of Linear Expansion × 10⁻⁵ [1/°C] | | Coefficients of Water Absorption (%) |
|---|---|---|---|---|---|---|
| | | | | Vertical Direction | Lateral Direction | |
| [Example 1] | PET | glass fibers | 50 | 2.0 | 3.5 | 0.5 |
| [Example 2] | PET (with hydrolysis prevention) | ↑ | 50 | 2.0 | 3.5 | 0.3 |
| [Example 3] | nylon 6, 6 | ↑ | 50 | 1.25 | 5.5 | 4.0 |
| [Example 4] | PPS | ↑ | 30 | 2.0 | 4.0 | 0.02 |
| [Example 5] | PPS | carbon fibers | 30 | 1.0 | 4.0 | 0.02 |
| [Example 6] | phenol resin | glass fibers | 55 | 1.6 | 4.0 | 0.1 |
| [Comparison Example 1] | PET | - | 0 | 7.0 | 7.0 | 0.8 |
| [Comparison Example 2] | nylon 6, 6 | - | 0 | 8.5 | 8.5 | 8.5 |
| [Comparison Example 3] | nylon 6, 6 | glass fibers | 25 | 3.0 | 6.5 | 5.5 |
| [Comparison Example 4] | PPS | - | 0 | 4.0 | 6.0 | 0.02 |
| [Comparison Example 5] | PPS | glass fibers + inorganic fillers | 65 | 1.9 | 2.4 | 0.02 |

### (2) Evaluation Test

Each of the resin materials in Examples 1 to 6 and Comparison Examples 1 to 5 was molded into a doughnut-shaped disk test piece having an inner diameter of 30 mm, an outer diameter of 100 mm, and a thickness of 3 mm. At that time, the inner diameter and the outer diameter thereof were subjected to machining so as acquire the above dimensions, and tightening margin with respect to the below-described aluminum ring was adjusted so as to be 0.05 mm at a temperature of 23°C. In the inner diameter portion of the test piece, an aluminum ring having an inner diameter of 20 mm, an outer diameter of 30.05 mm, and a thickness of 3 mm was press-fitted. In the outer diameter portion of the test piece, an aluminum ring having an inner diameter of 99.95 mm, an outer diameter of 110 mm, and a thickness of 3 mm was press-fitted. In this manner, in a state where the aluminum rings were press-fitted in the inner diameter and the outer diameter of the test piece, a low-temperature exposure test, a high-temperature exposure test, and a water absorption test were carried out. Thereafter, the rings and test piece (the resin portion) were checked to see whether there is an occurrence of coming-off or damage. The further tests were carried out with only the test piece in which the ring did not come off. The impact test was carried out with only the evaluation product which went through the low-temperature test.

The conditions for each test are as follows.
(a) Low-temperature exposure test: the internal temperature of the constant temperature tank was set to -40°C, and the test piece was put in the tank and left for 24 hours.
(b) High-temperature exposure test: the internal temperature of the constant temperature tank was set to 85°C, and the test piece was put in the constant temperature tank and left for 1,000 hours.
(c) Water absorption test: the test piece was put in the water at the temperature of 23°C and left for 72 hours.
(d) High-temperature and high-humidity test: the retention of tensile strength was evaluated after being left under an environment of 85°C and RH 85% for 500 hours.
(e) Checking of coming-off of rings: after carrying out each test, in a tank or an apparatus which was set to the same temperature as each test, the load of 20N was applied to the ring to check whether or not the ring comes off the test piece. At the same time, the surface of the test piece (the resin) was visually checked to find whether or not there are appearance defectives.
(f) Impact test: After checking coming-off of the rings with only the evaluation product which went through the low-temperature test, the test piece of which the ring did not come off was subjected to the low-temperature test, and furthermore, was caused to fall from the height of 1 m, thereby checking damage to the resin portion caused by impact.

Table 2 shows the results thereof.

**[Table 2]**

| | Base Resin | Filling Fibers | Filling Volume (% by mass) | Low-temperature Test | | | | High-temperature Test | | | Water Absorption Test | | | High-temperature and High-humidity Test | Resin Material Passed All Items |
|---|---|---|---|---|---|---|---|---|---|---|---|---|---|---|---|
| | | | | Coming-off of Inner Ring | Coming-off of Outer Ring | Crack | Falling | Coming-offof Inner Ring | Coming-off of Outer Ring | Crack | Coming-off of Inner Ring | Coming-offof Outer Ring | Crack | Retention of Strength (%) | |
| [Example 1] | PET | glass fibers | 50 | 0 | o | o | o | o | o | o | o | o | o | 72(o) | o |
| [Example 2] | PET (with hydrolysis prevention) | ↑ | 50 | o | o | o | o | o | o | o | o | o | o | 85(o) | o |
| [Example 3] | nylon 6, 6 | ↑ | 50 | o | o | o | o | o | o | o | o | o | o | 85(o) | o |
| [Example 4] | PPS | ↑ | 30 | o | o | o | o | o | o | o | o | o | o | 90(o) | o |
| [Example 5] | PPS | carbon fibers | 30 | o | o | o | o | o | o | o | o | o | o | 90(o) | o |
| [Example 6] | phenol resin | glass fibers | 55 | o | o | o | o | o | o | o | o | o | o | 95(o) | o |
| [Comparison Example 1] | PET | - | 0 | x | x | o | x | o | o | x | o | o | o | 60(x) | x |
| [Comparison Example 2] | nylon 6, 6 | - | 0 | x | x | o | o | o | o | o | o | o | x | 65(x) | x |
| [Comparison Example 3] | nylon 6, 6 | glass fibers | 25 | o | x | o | o | o | o | x | o | o | x | 80(o) | x |
| [Comparison Example 4] | PPS | - | 0 | o | o | o | x | o | o | x | o | o | o | 90(o) | x |
| [Comparison Example 5] | PPS | glass fibers + inorganic fillers | 65 | - | - | - | - | - | - | - | - | - | - | 95(o) | Damaged when fitting |

As is confirmed from Table 2, in Comparison Example 1 (the PET resin, no filling fiber contained), coming-off of the rings on the inner diameter side and the outer diameter side was found through the low-temperature test. In addition, a crack was found in the resin through the high-temperature test. Moreover, substantive degradation of strength was recognized through the high-temperature high-humidity test.

In Comparison Example 2 (the polyamide 66 resin, no filling fiber contained), coming-off of the rings on the inner diameter side and the outer diameter side was found through the low-temperature test, and a crack was found in the resin through the water absorption test. Moreover, substantive degradation of strength was recognized through the high-temperature high-humidity test.

In Comparison Example 3 (the polyamide 66 resin, reinforced with glass fibers of 25% by mass), coming-off of the ring on the outer diameter side was found through the low-temperature test, and a crack was found in the resin through the high-temperature test. In addition, a crack was found in the resin through the water absorption test as well.

In Comparison Example 4 (the PPS resin, no filling fiber), damage to the resin portion was found caused by impact, and a crack was found in the resin through the high-temperature test.

In Comparison Example 5 (the PPS resin, reinforced with glass fibers + inorganic fillers of 65% by mass), the resin was damaged when press-fitting the ring. Thus, the test could not proceed.

From the above results, even though the coefficient of linear expansion and the coefficient of water absorption differ depending on the resin composition which becomes the base material, it is possible to obtain sufficient dimensional stability by filling the fibrous filler in a range from 30% by mass to 55% by mass.

The present invention has been described in detail and with reference to the particular embodiments. However, it is obvious for those skilled in the art to be able to add various changes and modifications without departing from the spirit and scope of the present invention.

The present application is based on Japanese Patent Application No. 2012-251328 filed on November 15, 2012, the content of which is incorporated herein by reference.

### Industrial Applicability

In an electric power steering system according to the present invention, a housing is formed with a resin composition having particular strength, is lightweight and easily processed, and further, flexibility of the layout can be ensured and sufficient collapse strokes can be ensured even when an electromagnetic induction torque sensor is used.

### Description of Reference Numerals

- 1: Housing
- 1a: Output side housing member
- 1b: Input side housing member
- 1c: Bearing support housing member
- 2: Input shaft
- 2a: Cylindrical hole
- 3: Output shaft
- 3a: Cylindrical hole
- 4: Torsion bar
- 5a, 5b: Rolling bearing
- 6: Communication hole
- 7: Pin
- 8: Torque sensor
- 8a: First sensor member
- 8b: Second sensor member
- 9: Worm wheel
- 9a: Engagement portion
- 10: Electric motor
- 10a: Worm
- 11: First portion
- 11a: Large diameter portion
- 11b: Small diameter portion
- 11c: Stepped portion
- 12: Second portion
- 12a: Fitting portion
- 12b: Stepped surface
- 13: Bent portion

## Claims

1. An electric power steering system comprising:
an input shaft;
an output shaft which is connected to the input shaft via a torsion bar;
a torque sensor which detects steering force input to the input shaft as steering torque;
a housing which includes therein the input shaft, the output shaft and the torque sensor; and
at least one rolling bearing which supports the output shaft rotatably with respect to the housing,
wherein the housing includes at least one bearing support housing member supporting the at least one rolling bearing and is configured by a plurality of housing members, and
wherein the bearing support housing member supporting the at least one rolling bearing is formed of a resin.

2. The electric power steering system according to Claim 1,
wherein among bearing support housing members supporting the at least one rolling bearing, a bearing support housing member supporting a rolling bearing which is provided at a position closest to the torque sensor among rolling bearings is formed of the resin, and
wherein the torque sensor is an electromagnetic induction sensor.

3. The electric power steering system according to Claim 2,
wherein the bearing support housing member supporting the rolling bearing which is provided at the position closest to the torque sensor among the rolling bearings includes a first portion which is press-fitted onto an inner circumferential surface of a different housing member, and a second portion which supports the rolling bearing provided at the position closest to the torque sensor among the rolling bearings,
wherein the first portion and the second portion are connected to each other through a bent portion bent at a predetermined angle which is an acute angle or obtuse angle formed therebetween in a cross section along an axial direction of the output shaft, or a curved portion which has a curved shape in a cross section along the axial direction of the output shaft, and
wherein the rolling bearing provided at the position closest to the torque sensor among the rolling bearings is supported by being press-fitted in the bearing support housing member so as to be fixedly fitted therein.

4. The electric power steering system according to Claim 2 or 3,
wherein the bearing support housing member supporting the rolling bearing which is provided at the position closest to the torque sensor among the rolling bearings has a function to hold the torque sensor.

5. The electric power steering system according to Claim 1,
wherein the resin is made of a resin composition containing a fibrous filler ranging from 30% by mass to 55% by mass.

6. The electric power steering system according to any one of Claims 2 to 4,
wherein the resin is made of a resin composition containing a fibrous filler ranging from 30% by mass to 55% by mass.

7. The electric power steering system according to Claim 5,
wherein the resin can be continuously used in a temperature environment ranging from -40°C to 85°C, a coefficient of linear expansion of the resin ranges from 1.2 × 10⁻⁵ to 5.5 × 10⁻⁵ (1/°C) in both a fiber direction and a perpendicular direction to the fiber direction in a temperature range from 23°C to 80°C, and a coefficient of water absorption of the resin is equal to or less than 4% when being left in water at a temperature of 23°C for 24 hours.

8. The electric power steering system according to Claim 6,
wherein the resin can be continuously used in a temperature environment ranging from -40°C to 85°C, a coefficient of linear expansion of the resin ranges from 1.2 × 10⁻⁵ to 5.5 × 10⁻⁵ (1/°C) in both a fiber direction and a perpendicular direction to the fiber direction in a temperature range from 23°C to 80°C, and a coefficient of water absorption of the resin is equal to or less than 4% when being left in water at a temperature of 23°C for 24 hours.

9. The electric power steering system according to Claim 7,
wherein the resin has a retention of tensile strength equal to or greater than 70% after being left under an environment of 85°C and RH 85% for 500 hours.

10. The electric power steering system according to Claim 8,
wherein the resin has a retention of tensile strength equal to or greater than 70% after being left under an environment of 85°C and RH 85% for 500 hours.
